# EUROPEAN PATENT APPLICATION

(11) **EP 1 905 515 A2**
(43) Date of publication of application: **02.04.2008**
(21) Application number: 07115717.6
(22) Date of filing: 05.09.2007
(51) Int. Cl.: B01L 3/00

(54) **Centrifugal Force Based Microfluidic Device Having Thermal Activation Unit, Microfluidic System Including the Same and Method of Operating the Microfluidic System**

(30) Priority: 05.09.2006 KR 20060085298; 17.01.2007 KR 20070005426
(71) Applicant: Samsung Electronics Co., Ltd., Suwon-si, Gyeonggi-Do (KR)
(72) Inventor: Cho, Yoon-kyoung, Gyeonggi-do (KR); Lee, Jeong-gun, Gyeonggi-do (KR); Lee, Beom-seok, Gyeonggi-do (KR); Park, Jong-myeon, Gyeonggi-do (KR)
(74) Representative: Zimmer, Franz-Josef

(57) **Abstract**

A centrifugal force based microfluidic device including a thermal activation unit, a microfluidic system including the same, and a method of operating the microfluidic system are provided. The thermal activation unit accompanies a temperature change in order to carry out its functions and having heat generation particles that absorb electromagnetic waves and generate heat in the activation unit therein.

## Description

### BACKGROUND OF THE INVENTION

### 1. Field of the Invention

The present invention relates to a device and a method for moving a fluid sample in a microfluidic structure prepared in a body of revolution, using centrifugal force to perform a biochemical experiment with a small amount of sample, and more particularly, to a centrifugal force based microfluidic device having a unit operated by radiant heat in a microfluidic structure, a microfluidic system including an external energy source for controlling position, and a method of operating the microfluidic system.

### 2. Description of the Related Art

In general, a microfluidic structure formed of a microfluidic device may include a plurality of elementary units, such as a chamber, a channel, a valve, and various functional units, wherein the chamber stores a small amount of fluid, the fluid flows through the channel, the valve controls fluid flow, and the functional units receive the fluid to perform predetermined functions. This microfluidic structure, which is formed on a chip-type substrate for conducting experiments including a biochemical reaction, is referred to as a bio-chip. In particular, a device manufactured to perform several steps of processes and operations in one chip is referred to as a lab-on-a chip.

In order to transfer fluid in the microfluidic structure, driving pressure is needed. Capillary pressure and pressure by an additional pump may be used as the driving pressure. Recently, centrifugal force-based microfluidic devices in which microfluidic structures are disposed on a compact disk-type body of revolution have been suggested. Such a device is referred to as a Lab-on-a CD. However, in this case, since a body of revolution is not fixed onto a frame and thus moves, it is difficult to control fluid flow and temperature of the elementary units in the body of revolution.

In order to provide a valve which controls flow of a fluid sample in a compact disc-shaped microfluidic device, various methods have been attempted. U.S. Patent No. 6,143,248 discloses a capillary valve which controls fluid flow according to the number of rotations of a disk and U.S. Patent No. 6,919,058 discloses a hydrophobic break which also controls fluid flow according to the number of rotations of a disk using a capillary valve structure having a hydrophobic inner wall. However, in these cases, the number of rotations of a disk which affect the whole disk is used and thus various numbers of valves included in a complex microfluidic structure cannot be respectively controlled. In other words, in an arrangement of a microfluidic structure, position and number of valves are restricted. In addition, according to surface tension of a sample, the number of rotations should vary and thus various kinds of samples cannot be processed at the same time.

U.S. Patent No. 6,063,589 discloses a compact disc-shaped microfluidic device in which a wax valve is employed. In such device, a "Screen-printed Heater" is used to heat the wax valve. However, since the Screen-printed Heater and lead wires used therefor need a large area on a disk, various numbers of valves cannot be disposed on one disk. In addition, due to low thermal efficiency, time required for the wax valve to be melted is increased.

### SUMMARY OF THE INVENTION

The present invention provides a centrifugal force-based microfluidic device having a plurality of thermal activation units, wherein the centrifugal force-based microfluidic device can control each of the thermal activation units promptly and a microfluidic system including the centrifugal force-based microfluidic device. In addition, the present invention provides a method of operating the microfluidic system.

According to an aspect of the present invention, there is provided a centrifugal force based microfluidic device including: a body of revolution; and a microfluidic structure disposed in the body of revolution, including at least two chamber units, and a channel connecting the chamber units to each other and forming a fluid flow path between the chamber units, wherein the chamber units each are disposed at different distances with respect to each other from a center of rotation of the body of revolution and a fluid sample moves along the channel by centrifugal force, wherein the microfluidic structure includes at least one thermal activation unit which has heat generation particles that generate heat upon absorbing electromagnetic waves. The device may further include an external energy source applying the electromagnetic waves to the thermal activation unit.

Here, the thermal activation unit which can be included in the microfluidic structure is any unit which can be activated by heat to perform its function. For example, the thermal activation unit may be a valve unit including a valve material in which the heat generation particles are dispersed in a dispersing medium formed of a phase-change material which is in a solid state at room temperature, wherein the valve material is melted by heat generated by the heat generation particles, thereby opening or closing the channel. In addition, thermal activation unit may be a heating unit which stores a fluid sample containing a plurality of heat generation particles dispersed therein, and absorbs electromagnetic waves to heat the fluid sample.

The valve unit may be an opening valve which is disposed to close the channel at an initial stage, wherein the valve material is melted by heat generated by the heat generation particles, thereby opening the channel. The valve unit may be a closing valve which is disposed in a valve chamber connecting to the channel which is opened at an initial stage, wherein the valve material is melted and expanded by heat generated by the heat generation particles to flow into the channel, thereby closing the channel.

In the valve unit, the phase-change materials is one selected from the group consisting of wax, gel, and a thermoplastic resin. In addition, the heat generation particles may have a diameter of 1 nm to 100 µm and may be at least one selected from the group consisting of polymeric beads, quantum dots, Au nanoparticles, Ag nanoparticles, beads with metal composition, carbon particles, and magnetic beads. The heat generation particle may include a core and a shell, the core absorbing electromagnetic waves to convert the waves into heat energy, and the shell surrounding the core. The heat generation particles may include a metallic component to obtain excellent absorption efficiency of radiation energy and high thermal conductivity.

In the heating unit, each of the heat generation particles may include a core and a shell, the core absorbing electromagnetic waves to convert the waves into heat energy, and the shell surrounding the core. Here, the core may be formed of a ferromagnetic metal or a metal oxide and the surface of the shell may be treated to have biomolecules coupled thereto. The biomolecules may have specific or non-specific affinity to a target molecule in a fluid sample.

According to another aspect of the present invention, there is provided a microfluidic system including: the microfluidic device described above; a rotation operating unit which operates the body of revolution of the microfluidic device; an external energy source radiating electromagnetic waves of a wavelength band which induces heat generation of the heat generation particles included in the microfluidic device; and an external energy source adjusting means which adjusts position or direction of the external energy source and concentrates the electromagnetic waves irradiated from the external energy source onto a desired region disposed in the body of revolution.

Here, the rotation operating unit may include a motor to control rotation speed and rotation angle of the body of revolution. In addition, the energy source adjusting means may include a rectilinearly moving means which moves the external energy source in a radial direction of the body of revolution, at least one reflector which reflects electromagnetic waves radiated from the energy source, and a reflector operating unit which adjusts an angle of the reflector and changes the route of the electromagnetic waves, or a plane moving means (not illustrated) which moves the external energy source, above the body of the revolution, in a radial direction of the body of the revolution and a direction perpendicular to the radial direction, the radial direction and perpendicular direction movements are made on a same plane.

The external energy source may be a laser light source, wherein the laser light source may include at least one laser diode. The laser irradiated from the laser light source may be at least 1 mJ/pulse or above and is a pulse laser having energy which does not deform the microfluidic structure of the microfluidic device and the heat generation particles. Also, the laser irradiated from the laser light source may be at least 14 mW or above and is a continuous wave laser having an output which does not deform the microfluidic structure of the microfluidic device or the heat generation particles. The laser irradiated from the laser light source may have a wavelength of 400 to 1300 nm.

According to another aspect of the present invention, there is provided a method of operating any one of microfluidic systems described above, the method including: obtaining position information on each of the thermal activation units of the microfluidic device seated on the rotation operating unit; targeting the external energy source toward any one of the thermal activation units selected using the obtained information; and radiating electromagnetic waves from the external energy source for activating the selected thermal activation unit.

The targeting the external energy source may include detecting a deviation Δ(r,θ) or Δ(x,y) between a position of the thermal activation unit selected on the microfluidic device and a position where the electromagnetic waves of the external energy source reach, based on a position of initial targeting, and adjusting the position where the electromagnetic waves of the external energy source reach by the deviation Δ(r,θ) using the rotation operating unit and the external energy source adjusting means. In this case, the body of revolution may be reversely-rotated by Δθ using the rotation operating unit and the position where the electromagnetic waves reach may be moved by Δr in a radial direction of the body of revolution using the external energy source adjusting means. In addition, the position where the electromagnetic waves reach may be moved by Δ(x,y) according to deviations on the orthogonal coordinates using the external energy source adjusting means, while the microfluidic device is stopped.

The activating the thermal activation unit may include rotating the body of revolution back and forth within a predetermined small angle using the rotation operating unit for radiation energy to be uniformly transmitted onto the thermal activation unit. The activating the thermal activation unit may include vibrating the position where the electromagnetic waves reach back and forth within a predetermined short distance in a radial direction of the body of revolution using the external energy source adjusting means for radiation energy to be uniformly transmitted to the thermal activation unit.

### BRIEF DESCRIPTION OF THE DRAWINGS

The above and other features and advantages of the present invention will become more apparent by describing in detail exemplary embodiments thereof with reference to the attached drawings in which:

FIG. 1 is a perspective view of a microfluidic system according to an embodiment of the present invention;

FIG. 2 is a perspective view of a microfluidic system according to another embodiment of the present invention;

FIG. 3 is a perspective view of a microfluidic system according to another embodiment of the present invention;

FIG. 4 is a perspective view of a microfluidic system according to another embodiment of the present invention;

FIG. 5 is a plan view of an opening valve, which is an example of a thermal activation unit, according to an embodiment of the present invention;

FIGS. 6A and 6B are cross-sectional views of the opening valve of FIG. 5 illustrating an initial stage and open-state, respectively, according to an embodiment of the present invention.

FIG. 7 is a plan view of a closing valve, which is another example of a thermal activation unit, according to an embodiment of the present invention;

FIG. 8 is a cross-sectional view of the closing valve of FIG. 7, according to an embodiment of the present invention;

FIG. 9 is a series of photo images captured by a high speed camera illustrating operations of the opening valve according to an embodiment of the present invention;

FIG. 10 is a series of photo images captured by a high speed camera illustrating operations of the closing valve according to an embodiment of the present invention;

FIG. 11 is a graph illustrating the relationship between a volume ratio of ferrofluid included in a valve plug of the opening valve and the response time of the valve, according to an embodiment of the present invention;

FIG. 12 is a graph illustrating the relationship between laser output power used as an energy source in the opening valve and the response time of the valve, according to an embodiment of the present invention;

FIG. 13 is a plan view of a heating chamber, which is another example of a thermal activation unit, according to an embodiment of the present invention;

FIGS. 14 through 16 illustrate a method of controlling a position of an external energy source according to an arrangement of a thermal activation unit in a microfluidic system, according to an embodiment of the present invention;

FIG. 17 is a plan view of a microfluidic device including a plurality of thermal activation units according to an embodiment of the present invention; and

FIG. 18 is a series of diagrams illustrating a process of operating a microfluidic system including the microfluidic device of FIG. 17, according to an embodiment of the present invention.

### DETAILED DESCRIPTION OF THE INVENTION

Hereinafter, the present invention will be described more fully with reference to the accompanying drawings, in which exemplary embodiments of the invention are shown.

A microfluidic device according to an embodiment of the present invention and a microfluidic system including the microfluidic device will be described first with reference to the functions thereof. Even though the accompanying figures illustrate specific exemplary configurations of microfluidic systems according to the present invention, it should be noted that the configuration of microfluidic structures such as channels, chambers, holes and other components of the system may be modified depending on the particular uses or needs of the centrifugal microfluidic system. Such modification is within the knowledge and practice of one skilled in the art.

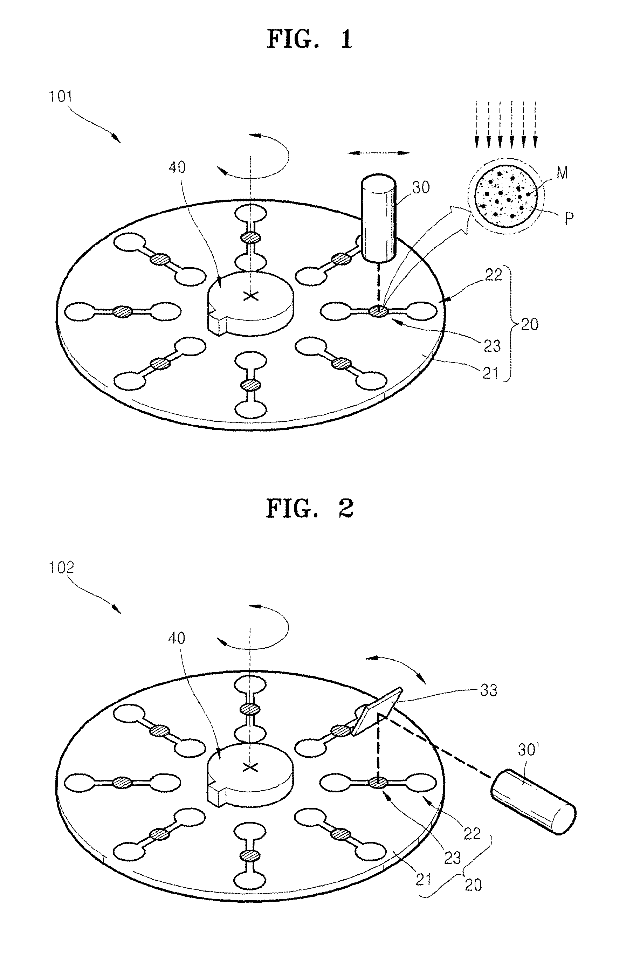

FIG. 1 is a perspective view of a microfluidic system 101 according to an embodiment of the present invention. Referring to FIG. 1, the microfluidic system 101 includes a microfluidic device 20 according to an embodiment of the present invention. The microfluidic device 20 includes a microfluidic structure 22 which is disposed in a disk-shaped body of revolution 21. The microfluidic structure 22 includes at least one thermal activation unit 23. The microfluidic structure 22 of the microfluidic device 20 in FIG. 1 is illustrated symbolically by simplifying various types of structures which can actually be included. The microfluidic structure 22 includes at least two elementary units, and the elementary units are connected to a channel through which fluid samples flow. The elementary units are disposed at different distances from the center of the body of revolution 21 and thus the fluid samples can flow through the channel by centrifugal force. Here, the elementary units are base elements which constitute the microfluidic structure 22 such as chambers (a storing chamber, a mixing chamber, a reaction chamber, and a culture chamber, etc) and valves, wherein the chambers perform predetermined functions and the valves are disposed in channels connecting the chambers to control the fluid flow. In addition, among the elementary units, the thermal activation unit 23 accompanies a temperature change in order to carry out the functions and is either operated by heating or reaches to a state that is suitable for performing the functions.

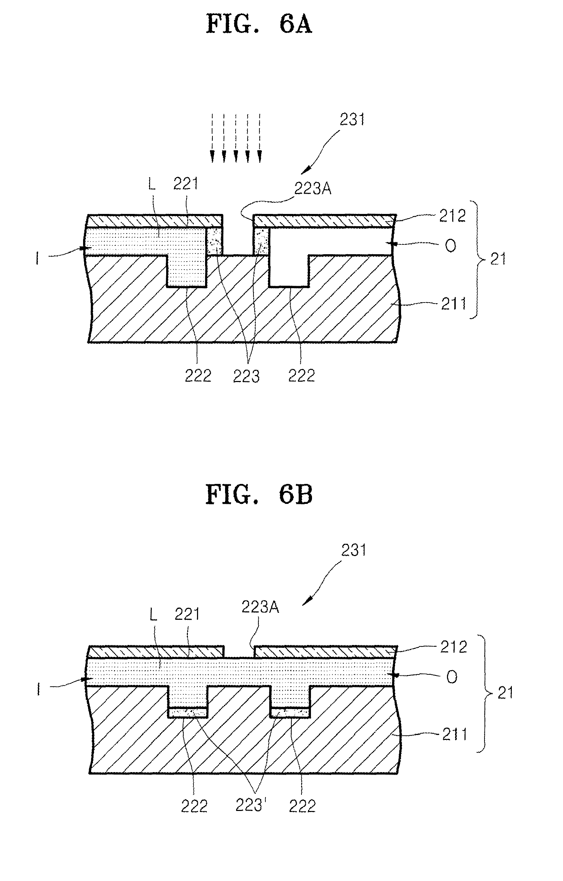

As illustrated in FIG. 1, the thermal activation unit 23 includes heat generation particles M. The heat generation particles M may be dispersed in a medium P or may be dispersed or condensed in fluid samples. In the thermal activation unit 23, the heat generation particles M absorb radiation energy from electromagnetic waves, which may be irradiated from an external energy source, and emit heat around the microfluidic device 20 to perform the function of the thermal activation unit 23. More detailed examples of the thermal activation unit 23 will be described later with reference to FIGS. 6 through 18.

The microfluidic system 101 according to the current embodiment of the present invention includes an energy source 30 which irradiates electromagnetic waves onto the thermal activation unit 23 so as to provide radiation energy. The energy source may be an external device, i.e., disposed separately outside the microfluidic device, rather than being built-in or attached to the microfluidic device. The energy source 30 may be a device which can irradiate electromagnetic waves of a wavelength band of interest. For example, the wavelength may be selected from electromagnetic waves such as microwaves, infrared rays, visible rays, ultraviolet rays, and X-rays. In addition, the energy source 30 may be any device which can irradiate electromagnetic waves concentrically onto a target in a short distance. The energy source 30 may irradiate electromagnetic waves of a wavelength range that can be easily absorbed by the heat generation particles M. Therefore, a device which generates electromagnetic waves in the energy source 30 can be selected according to a material and surface condition of the heat generation particles M.

The energy source 30 can be, for example, a laser light source irradiating a laser beam. In this case, at least one laser diode can be included in the energy source 30. Details such as the wavelength of the laser beam and generating power can be determined according to the type of the thermal activation unit 23 included in the microfluidic device 20.

The microfluidic system 101 may include a laser light source adjusting means (not illustrated) which adjusts position or direction of the external energy source 30 and concentrates an electromagnetic wave irradiated from the energy source 30 in a desired region on the microfluidic device 20, more specifically, a region corresponding to the thermal activation unit 23 selected from a plurality of elementary units included in the microfluidic device 20. An energy source adjusting means (not illustrated) in the microfluidic system 101 of FIG. 1 can move the energy source 30 installed facing the body of revolution 21 in a direction indicated by an arrow, in other words, a radial direction of the body of revolution 21. A mechanism of rectilinearly moving the energy source 30 can be provided in various ways and is known to those of ordinary skill in the art. Therefore, a detailed description thereof is omitted.

Meanwhile, the microfluidic system 101 includes the rotation operating unit 40 which rotates the body of revolution 21. The rotation operating unit 40 as illustrated in FIG. 1 is to fix the body of revolution 21 and to transmit a turning force, providing a stable rotation of the body of revolution 21. In addition, while not illustrated in FIG. 1, a motor and related parts thereof for the body of revolution 21 to be rotated with constant speed or by a certain angle as desired, can be included in the microfluidic system 101. A detailed description of the configuration of the rotation operating unit 40 is omitted. The energy source 30 can irradiate an electromagnetic wave selectively onto one of the thermal activation units 23 in the microfluidic device 20 with the aid of the laser light source adjusting means (not illustrated) and the rotation operating unit 40.

FIG. 2 is a perspective view of a microfluidic system according to another embodiment of the present invention. Referring to FIG. 2, the microfluidic system 102 according to the current embodiment includes a microfluidic device 20, a rotation operating unit 40, and an energy source 30' which are the same as those explained above with respect to the microfluidic system 101 of FIG. 1. However, in this case, the energy source 30' is static in the current embodiment. The microfluidic system 102 includes at least one reflector 33 and a reflector operating unit (not illustrated), wherein the reflector 33 controls a path of electromagnetic wave beams irradiated from the energy source 30' and the reflector operating unit controls an angle of the reflector 33. There can be one or more reflectors 33 depending on the position of the energy source 30' in the microfluidic device 20, which is fixed to one location. As illustrated with an arrow in FIG. 2, the reflector operating unit (not illustrated) which controls an angle of the reflector 33 may be included in the reflectors 33 to adjust focal points of the reflected electromagnetic waves. Therefore, it is possible to finely adjust the position where the electromagnetic wave beams are irradiated onto the microfluidic device 20.

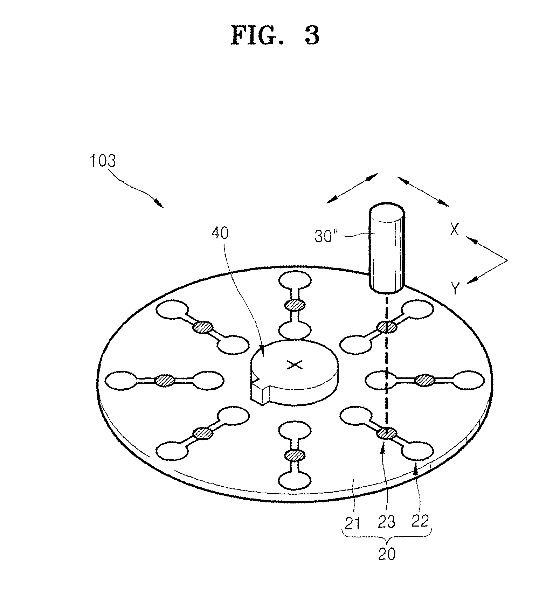

FIG. 3 is a perspective view of a microfluidic system 103 according to another embodiment of the present invention. Referring to FIG. 3, the microfluidic system 103 includes a microfluidic device 20, a rotation operating unit 40, and an energy source 30", which are the same as those explained above with respect to the microfluidic system 101 of FIG. 1. However, in the microfluidic system 103 according to the current embodiment of the present invention, an energy source adjusting means (not illustrated) may further include a plane moving means (not illustrated) which allows the energy source 30" to move radially above the body of revolution 21 (for example, y axis direction in FIG. 3) as well as a perpendicularly with respect to the radial direction (for example, x axis direction in FIG. 3). This allows electromagnetic waves from the energy source to be reached a target point (for example, the thermal activation unit 23) disposed on the body of revolution 21.

In addition or alternatively, while not illustrated in FIG. 3, the energy source adjusting means may change the direction of the electromagnetic waves radiated from the energy source which is fixed at a position above the body of revolution 21 so that the electromagnetic waves can reach the target point.

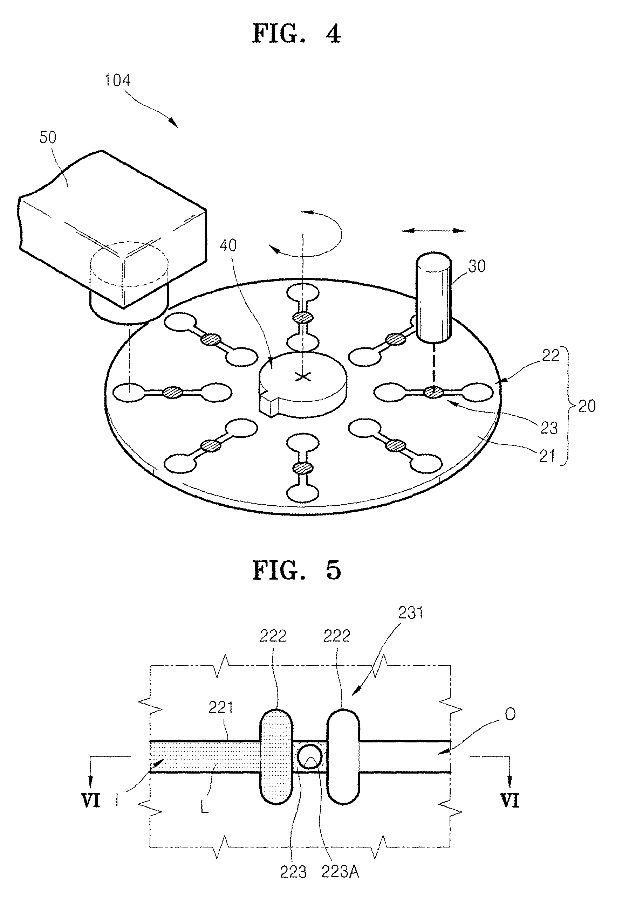

FIG. 4 is a perspective view of a microfluidic system 104 according to another embodiment of the present invention. Referring to FIG. 4, the microfluidic system 104 according to the current embodiment includes a microfluidic device 20, an energy source 30, energy source adjusting means (not illustrated), and a rotation operating unit 40, which are the same as those described above with respect to the microfluidic system 101 of FIG. 1. However, the microfluidic system 104 according to the current embodiment may further include a signal detection unit 50 which detects and, optionally, displays information of a reaction of a fluid sample in a certain region in the microfluidic device 20. The signal detection unit 50 may be a photometric or radiometric, depending on the types of the signal transmitted from a reaction(s) of fluid samples. For example, the signal may be an optical signal such as fluorescence or radioactivity, depending on the kinds of a label or marker molecule contained in the fluid sample. Such labels or markers for biochemical assays and their detection methods and devices are known in the art. For example, when, for example, the photometric unit 50 is provided to observe a final or an intermediate product of the reaction of the fluid sample using an optical signal such as fluorescent light or color, the signal detection unit 50 may be a photometric unit which can be formed of various elements such as a photo diode, an optical pick-up, and image pickup devices (CCD and CMOS sensors). In addition, the system 104 may further contain a device which amplifies the signal to be detected. For example, a photo multiplier tube (PMT) may be included in the microfluidic system 104 to amplify an optical signal. The signal detection unit 50 can be fixed at a position or can be installed to move in a radial direction of the body of revolution 21, as described above with respect to the energy source 30 in the microfluidic system 101 of FIG. 1.

FIG. 5 is a plan view of an opening valve, which is an example of the thermal activation unit 23, according to an embodiment of the present invention, and FIGS. 6A and 6B are cross-sectional views of the opening valve of FIG. 5 illustrating an initial stage and open-state, respectively. While FIGS. 5-10 illustrate an embodiment of the valve units, which may be implemented into the microfluidic systems according to embodiments of the present invention, other modifications and changes may be made to the valve units. Such modifications and changes are described, for example, in a commonly owned, co-pending application Serial Nos. 11/770,762 and 11/752,321.

The thermal activation unit 23 according to an embodiment of the present invention includes a valve unit, wherein the valve unit controls fluid flow. The valve unit can be disposed at the middle of a channel 221 which provides a connection path between two units in the microfluidic device 20.

The opening valve 231 which is an example of a valve unit includes a valve plug (or valve filler) 223 formed of a valve material which is in a solid-state (or high viscosity state) at room temperature. The valve material may include a dispersing medium formed of a phase-change material which changes its phase or viscosity depending on the temperature and heat generation particles dispersed in the dispersing medium.

In a lower part and an upper part of the channel 221 which is adjacent to the initial position of the valve plug 223, wherein the valve plug 223 is in a solid state, a channel expansion portion 222 providing an available space prepared by expanding the width or the depth of the channel expansion portion 222 is disposed.

The valve plug 223 prevents fluid samples L flowing from an inlet I by completely blocking the channel 221 centering around an opening portion 223A at room temperature. When the valve plug 223 is melted at high temperature (e.g., a temperature higher than glass transition temperature or melting point of the dispersing medium), it flows and moves to the adjacent channel expansion portion 222 and thus is solidified (223'), thereby opening the channel 221. In other embodiment, the valve plug 223, when melted, is dispersed in the fluid which flows the channel 221. The opening portion 223A also has a function as an inlet through which the melted valve material 223 is injected in fabricating the microfluidic device 20.

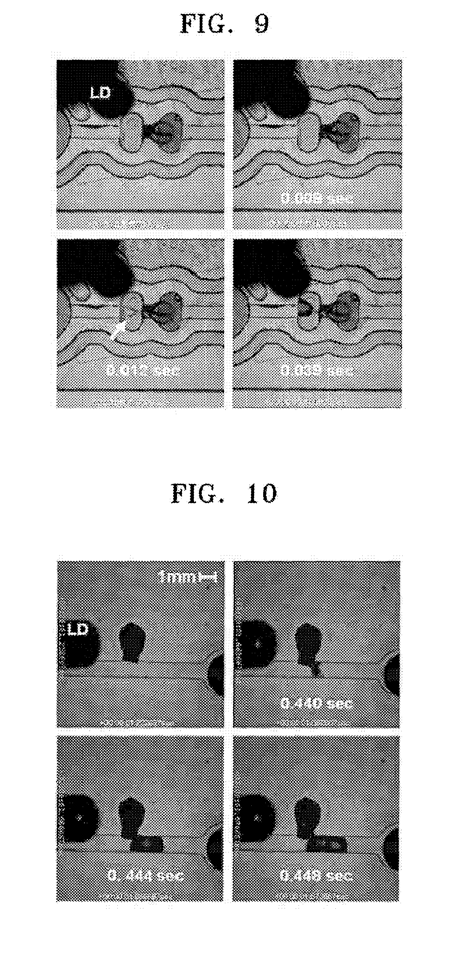

In order to heat the valve plug 223, the energy sources 30, 30', and 30" may be disposed outside the microfluidic device 20 and radiate electromagnetic waves onto the initial position of the valve plug 223, that is, the opening portion 223A and a region around the opening portion 223A. In this case, the energy sources 30, 30', and 30" may be, for example, a laser light source irradiating laser beams. Here, at least one laser diode can be included. When the laser light source irradiates a pulse laser, a pulse laser having energy of 1 mJ/pulse or above can be irradiated. When the laser light source irradiates a continuous wave laser, a continuous wave laser having an output of 10 mW or above can be irradiated. In an experiment described in FIGS. 9 through 12, a laser light source irradiating laser light having a wavelength of 808 nm is used, but is not limited thereto. Any laser light source which can irradiate laser light having a wavelength of 400 to 1300 nm can be used as the energy sources 30, 30', and 30" in the microfluidic system.

The channel 221 can be provided by a three-dimensional pattern formed in an upper disk 212 and/or lower disk 211, both consisting of the body of revolution. The upper disk 212 transmits electromagnetic waves irradiated from the energy source (not illustrated) to be incident onto the valve plug 223. In addition, the upper disk 212 may be formed of optically transparent material in order to observe the fluid samples L from the outside. For example, glass or transparent plastic have excellent optical transparency and low manufacturing costs.

The channel 221 and a pair of the channel expansion portions 222 may be disposed in the body of revolution 21 formed of the upper disk 212 and the lower disk 211, wherein the upper disk 212 and the lower disk 211 are bonded to each other. The method of bonding the upper disk 212 and the lower disk 211 includes, but is not limited to, using an adhesive agent or double-sided adhesive tape, or ultrasonic welding. More specifically, the channel 221 and a pair of the channel expansion portions 222 may be formed by a negative pattern on the lower disk 211. In addition, the opening portion 223A is formed on the upper disk 212 to inject valve material between the channel expansion portions 222. The channel 221 is a micro channel having the width of about 1 mm and the depth of about 0.1 mm. The channel expansion portions 222 can be formed to have a depth of approximately 3 mm.

The size of the heat generating particles dispersed in the valve plug 223 may have a diameter of 1 nm to 100 µm so as to freely move in the channel 221 of the order of thousands of µm. When laser is irradiated, the temperature of the heat generation particles is rapidly increased by the radiation energy so as to generate heat, and the heat generating particles are uniformly dispersed in wax. In order for the heat generation particles to be dispersed uniformly, the heat generation particles may have structures including a core having a metallic component and a hydrophobic shell. For example, the heat generation particles may include a core formed of Fe which is a ferromagnetic material, and a shell formed of a plurality of surfactants which are bonded to Fe to surround the core. In general, the heat generation particles may be used as a dispersion of heat generation particles in a carrier oil. In order for the heat generation particles having hydrophobic surfaces to be dispersed uniformly, the carrier oil may also be hydrophobic. The valve plug 223 can be manufactured by mixing the carrier oil in which the heat generation particles are dispersed therein with the wax. The heat generation particles is not limited to the examples above and may be polymer beads, quantum dots, Au nanoparticles, Ag nanoparticles, beads with a metal composition, carbon particles, or magnetic beads. Examples of the carbon particles include graphite.

The valve plug 223 may include a phase-change material such as wax. When the radiation energy absorbed by the heat generation particles is dissipated in the form of heat energy, the wax is melted (or reduces its viscosity) so as to have fluidity and thus a form of the valve plug 223 is broken down to open the flow channel of the fluid samples L. The wax forming the valve plug 223 may have an adequate melting point. When the melting point of the wax is too high, time required for the wax to be melted after laser irradiation is started is increased and thus it is difficult to control adequately an opening time. When the melting point of the wax is too low, the fluid samples L can be leaked, since the wax is partially melted while laser is not irradiated. Examples of the wax may be paraffin wax, microcrystalline wax, synthetic wax, or natural wax.

The phase-change material also may be gel or a thermoplastic resin. Example of the gel may include polyacrylamide, polyacrylates, polymethacrylates, and polyvinylamides. In addition, the thermoplastic resin may be COC (cyclic olefin copolymer), PMMA (polymethylmethacrylate), PC (polycarbonate), PS (polystyrene), POM (polyoxymethylene), PFA (perfluoralkoxy), PVC (polyvinylchloride), PP (polypropylene), PET (polyethylene terephthalate), PEEK (polyetheretherketone), PA (polyamide), PSU (polysulfone), or PVDF (polyvinylidene fluoride).

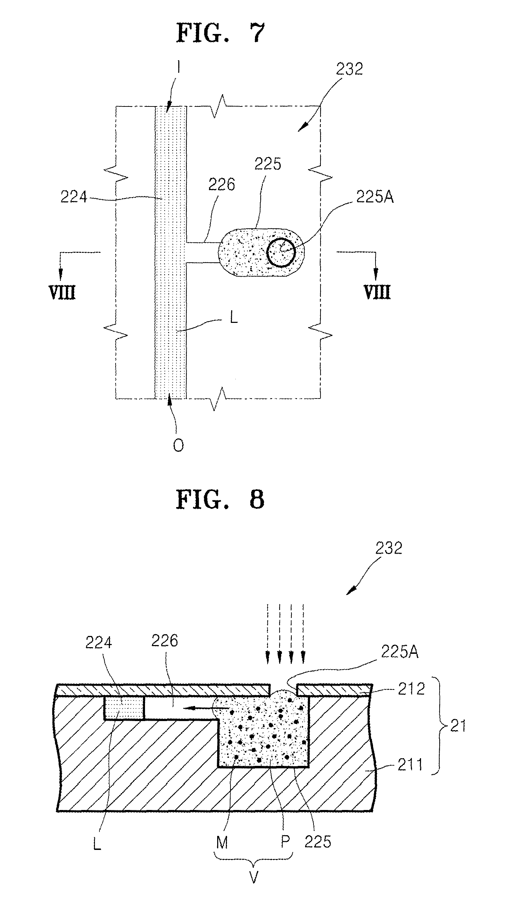

FIG. 7 is a plan view of a closing valve 232, which is another example of a thermal activation unit, according to an embodiment of the present invention, and FIG. 8 is a cross-sectional view of the closing valve 232 of FIG. 7.

The closing valve 232 which is another example of the valve unit, includes a channel 224, a valve chamber 225, and a valve plug. Here, the channel 224 includes an inlet I and an outlet O and the valve chamber 225 is connected to the center of the channel 224. In addition, the valve material (V) filled in the valve chamber 225 in a solid-form (or high viscosity state) under room temperature at an initial stage flows into the channel 224 after the valve material (V) is melted and expanded by heating and is solidified again to form a valve plug blocking fluid flowing through the channel 224. Here, the closing valve 232 is one of the elementary units which consists of the microfluidic structure 22 in the microfluidic device 20 described above. Each of the inlet I and the outlet O is connected to a different unit, respectively. The channel 224 acts as a path which enables the fluid sample L to move between the units.

Similar to the above-described opening valve 231, the structure of the closing valve 232 can be provided by a three-dimensional pattern formed in an upper disk 214 and/or a lower disk 213, both consisting of the body of revolution 21 of the microfluidic device 20. The upper disk 214 may be formed of optically transparent material in order to transmit electromagnetic waves irradiated from the energy source (not illustrated) and to observe the fluid samples L from the outside. In addition, the upper disk 214 may have a punching unit 225A which corresponds to the valve chamber 225 in order for electromagnetic waves (for example, a laser beam) to be easily incident onto the valve plug.

Phase-change materials P and heat generation particles M composing the valve material (V) are the same as those described above with respect to the opening valve 231. In addition, the energy sources 30, 30', and 30" which provide radiation energy to the valve plug are as described above.

When a laser beam is irradiated to the valve material (V) including the phase-change materials P and the heat generation particles M, the heat generation particles M absorb radiation energy to heat the phase-change materials P. Accordingly, the volume of the valve material (V) is expanded while it is melted, and the valve material (V) flows into the channel 224 through a channel 226 connected with the channel 224. The valve plug which is formed by solidification of the valve material (V) after the valve material contacts the fluid samples L in the channel 224, blocks the fluid samples L flowing through the channel 224.

An experiment on measuring the response time of the valve unit described above was carried out and the result thereof is as follows. In a test chip used in the experiment, the pressure of an operating fluid maintains at 46kPa. In order to maintain the pressure, a syringe pump (Havard PHD2000, USA) and a pressure sensor (MP 5500DP, Freescale semiconductor Inc., AZ, USA) were used. A laser light source with a radiated wavelength of 808 nm and an output of 1.5 W was used as an energy source which radiates electromagnetic waves onto the valve unit. Data related to the response time of the valve unit was obtained by analyzing the result of a high speed camera (Fastcam-1024, Photron, CA, USA). For the valve plug, ferrowax material was used, wherein wax (e.g., paraffin wax) is mixed with a ferrofluid. Ferrofluid is a combination of a ferromagnetic material is dispersed in a carrier oil. In the current experiment, magnetic beads having an average diameter of 10 nm are dispersed in a carrier oil, and the volume ratio of paraffin wax and the ferrofluid was 1:1.

FIG. 9 is a series of photo images captured by a high speed camera illustrating operations of the opening valve 231 according to an embodiment of the present invention. Referring to FIG. 9, the response time from the time when laser beam starts radiating onto the valve plug 223 of the opening valve 231 to the time when valve plug 223 is melted and thus the channel 224 is opened was 0.012 seconds.

FIG. 10 is a series of photo images captured by a high speed camera illustrating operations of the closing valve 232 according to an embodiment of the present invention. Referring to FIG. 10, the response time from the time when laser beam starts radiating onto the valve material (V) of the closing valve 232 to the time when valve material (V) is melted and thus the channel 224 is closed was 0.444 seconds. The response is much faster than that of a conventional wax valve which took 2 through 10 seconds.

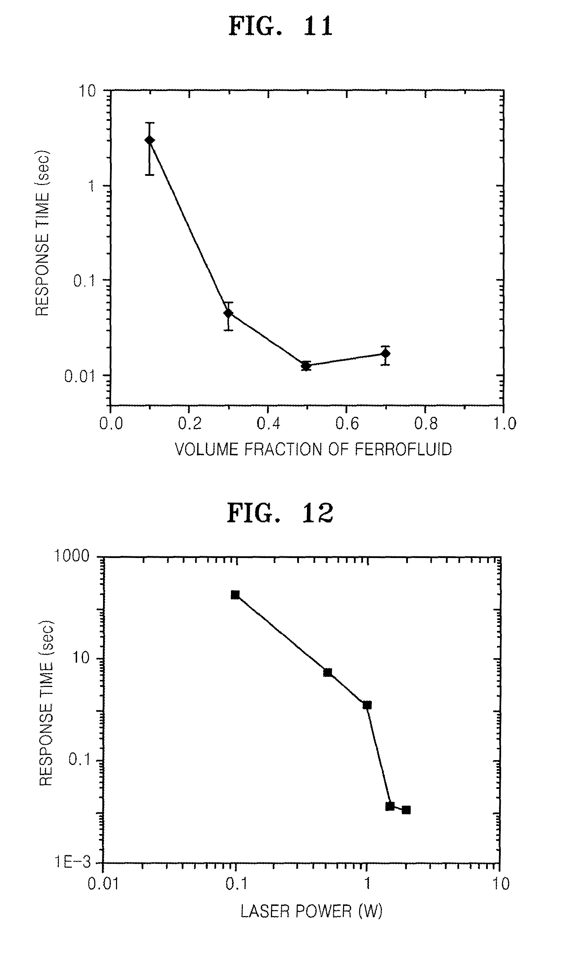

FIG. 11 is a graph illustrating the relationship between a volume ratio of ferrofluid included in the valve plug 223 of the opening valve 231 and the response time of the valve, according to an embodiment of the present invention. Referring to FIG. 11, the more the volume ratio of the ferrofluid increases, the more the response time reduces. However, when the volume ratio of the ferrofluid increases to 70 % or above, the maximum hold-up pressure of the valve plug 223 may be lowered. Therefore, in the valve unit, the volume ratio of the ferrofluid that will be included in the valve plug 223 can be determined by a compromise between a demand for the response time and a demand for the maximum hold-up pressure. In the exemplary embodiments described above, the specific volume ratio of the ferroluid was 50% when the compositions of the ferrofluid were hydrocarbon based carrier oil (77~92 %), nano-sized iron oxide molecules (1~5 %), oil soluble dispersant (6~16 %), and oil soluble additives (1~2 %). However, the volume ratio of the ferrofluid is variable according to the channel dimension and the required hold-up pressure of the valve plug. For example, the hold-up pressure of the valve plug is about 400 kPa with the ferrofluid of 50 % when the channel has a depth of 0.1 mm and a width of 0.1 mm. However, the volume ratio of the ferrofluid can be 70 % or higher when the required hold-up pressure is 125 kPa or less.

FIG. 12 is a graph illustrating the relationship between laser output power used as an energy source in the opening valve 231 and the response time of the valve, according to an embodiment of the present invention. Referring to FIG. 12, the more the output power increases, the more the response time reduces. However, when laser output power approaches 1.5 W, the change of the response time becomes gentle (while not illustrated in the graph). When laser output power exceeds 1.5 W, the response time is converged to a predetermined minimum. This is because of the restriction of thermal conductivity through paraffin wax. Accordingly, in this experiment, a laser light source with an output of 1.5 W was used, but the energy source of the present invention is not limited thereto.

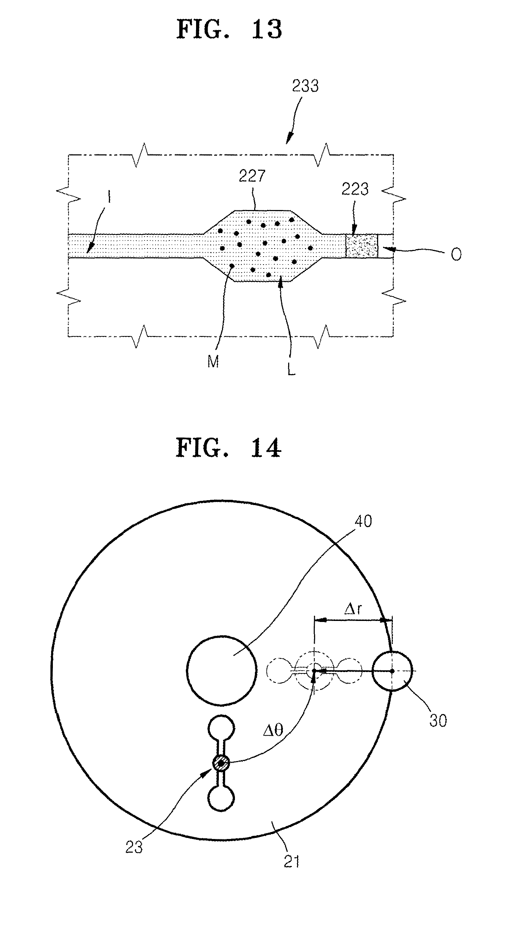

FIG. 13 is a plan view of a heating unit 233, which is another example of the thermal activation unit 23, according to an embodiment of the present invention. The microfluidic device 20 according to the current embodiment of the present invention can include the heating unit 233. Here, one of the functions of the heating unit 233 is to raise partially or overall the temperature thereof after heating the sample fluid L. As an example of the thermal activation unit, the units which perform various functions can be included, the functions including facilitating a reaction between the fluid sample L and other materials, culturing cells included in the fluid sample L, extracting nucleic acid after dissolving cells, and amplifying nucleic acid by applying a PCR cycle.

The heating unit 233 includes a heating chamber 227 provided in the body of revolution 21 of the microfluidic device 20. The inlet I of the heating chamber 227 is connected with another unit (not illustrated) disposed closer from the center of the body of revolution 21 than the heating chamber 227. Meanwhile, the valve plug 223 of the opening valve described above can be disposed in the outlet O of the heating chamber 227. The fluid sample L can be stored in the heating chamber 227 through the valve plug 223. The heat generation particles M are included in the heating chamber 227. The heat generation particles M absorb radiation energy from the energy sources 30, 30' and 30" through the surface of the microfluidic device 20 in a heat energy form.

In this case, like the valve units described above, the heat generation particles M may include a core and a shell, wherein the core absorbs radiation energy to be converted into heat energy and the shell surrounds the core. The core may be formed of a ferromagnetic metal or a metal oxide. More specifically, the core may include at least one material selected from the group consisting of ferromagnetic metals such as Fe, Ni, and Cr and oxides thereof When the heat generation particles M include a ferromagnetic material, the heat generation particles M can be easily separated from the fluid sample L after the heating unit 233 completes performing its function, since the heat generation particles M can be collected using a magnet. On the other hand, the shell may have a different property according to the use of the heating unit 233. The surface of the shell may be hydrophilic. In this case, since most of the sample fluid L is a hydrophilic solution, the heat generation particles M can be uniformly dispersed. In addition, the surface of the shell can be treated to have molecules which are capable of specifically or non-specifically bind to biomolecules of interest contained in the fluid sample. Accordingly, biomolecules of interest can be separated from the fluid sample L using the heat generation particles M, and additional functions which culture and destroy the separated biomolecules also can be performed. Types of biomolecules and surface-treated magnetic particles are described in a commonly owned co-pending application serial No. 11/752,321.

Hereinafter, a method of operating a microfluidic system according to embodiments of the present invention will be described with reference to the following examples. The method of operating the microfluidic system can be applied to various embodiments described above.

First, when the microfluidic device is seated on the rotation operating unit 40 of the microfluidic system, the microfluidic system obtains position information of at least one thermal activation unit included in the microfluidic device 20. There are various methods of obtaining position information. For example, information on a unit position of the microfluidic devices which will be used in the information storing unit of the microfluidic system is stored first. Then, when the microfluidic device 20 seated on the rotation operating unit 40 is recognized, information on a unit arrangement of the microfluidic devices is loaded to use when operating the microfluidic system. In this case, with only identifying a position of the standard point of the microfluidic device seated on an arbitrary point, information on a later operation can be obtained. In addition, identification codes are given to each of the thermal activation units 23 of the microfluidic device 20 or a position corresponding to the thermal activation units 23 for the microfluidic system to recognize the identification codes so as to obtain position information on each of the thermal activation units 23.

Next, the energy source 30 targets toward any one of the thermal activation units 23 selected using the obtained position information. In a targeting process of the energy source 30, based on a position of initial targeting, a deviation Δ(r,θ) between a position of the thermal activation unit 23 selected on the microfluidic device 20 and a position where the electromagnetic waves of the energy source 30 reach is detected, and the position where the electromagnetic waves of the energy source 30 reach can be adjusted by the deviation Δ(r,θ) using the rotation operating unit 40 and the energy source adjusting means (not shown). As an example, when the energy source adjusting means moves the position where the electromagnetic wave reaches one-dimensionally, the body of revolution is reversely-rotated by Δθ using the rotation operating unit and the position where the electromagnetic waves reach can move by Δr in a radial direction of the body of revolution using the energy source adjusting means. Here, polar coordinates are used in the microfluidic system, but the present invention is not limited thereto. According to the structural constitution of the energy source, orthogonal coordinates also can be used. On the other hand, selection of the thermal activation unit which is a target of the energy source can be determined by input of users at that time or by a previously input program. In particular, a plurality of the thermal activation units is included in the microfluidic device, and control of the thermal activation units by a program can be easily performed, in the case of sequentially operating the thermal activation units.

Next, electromagnetic waves are irradiated onto the thermal activation unit targeted to activate the thermal activation unit 23. Here, the microfluidic system irradiates electromagnetic waves (for example, laser beam) and the rotation operating unit 23 rotatively vibrate the body of revolution in a reciprocating manner so that radiation energy to be uniformly transmitted onto the thermal activation unit 23. Similarly, the microfluidic system may vibrate the position where the electromagnetic waves reach back and forth around the thermal activation unit 23 in a radial direction of the body of revolution using the energy source adjusting means for radiation energy to be uniformly transmitted to the thermal activation unit.

FIGS. 14 through 16 illustrate a method of controlling a position of the energy source according to an arrangement of the thermal activation unit in the microfluidic system, according to an embodiment of the present invention.

FIG. 14 illustrates an operation of activating one thermal activation unit 23, individually, according to an embodiment of the present invention. Referring to FIG. 1, the energy source 30 is installed facing the microfluidic device 20 and rectilinearly moves in a radial direction of the microfluidic device 20. When one thermal activation unit 23 is selected, the position of the thermal activation unit 23 is known at the starting point of irradiating the energy source 30 and Δ (r,θ), which is a deviation on the polar (or perimetric) coordinates - r: radial coordinate and θ: angular coordinate or polar angle - from the energy source 30 to the thermal activation unit 23, is obtained. In addition, the body of revolution 21 can be rotated by Δθ using the rotation operating unit and the energy source 30 can be moved in a radial direction of the body of revolution 21 by Δr using the energy source adjusting means (not illustrated).

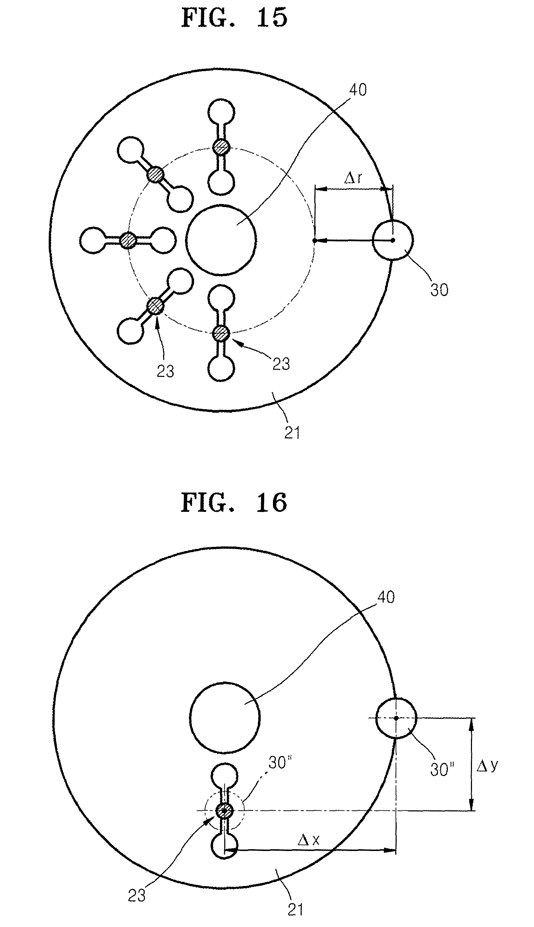

FIG. 15 illustrates an operation of activating a number of thermal activation units 23 at the same time, each of which is disposed at the same distance from the center of the rotation in the microfluidic device, according to an embodiment of the present invention. Similarly, the energy source 30 is installed facing the microfluidic device and rectilinearly moves in a radial direction over the microfluidic device as in FIG. 14. The microfluidic system determines a deviation Δr between the radius of the position where the thermal activation units 23 are disposed and the position of the energy source 30 at an initial stage of targeting. Then, the microfluidic system moves the energy source 30 by the deviation Δr using the energy source adjusting means and then rotates the body of revolution 21 using the rotation operating unit and irradiates electromagnetic waves at the same time.

FIG, 16 illustrates an operation of activating one thermal activation unit 23, individually, according to an embodiment of the present invention. Referring to FIG. 16, the energy source 30" is installed facing the microfluidic device 20 and moves on a plane that is parallel with the upper (or lower) surface of the body of revolution 21 of the microfluidic device 20. Once one thermal activation unit 23 is selected, the distance between the energy source 30" and the thermal activation unit 23 of interest, Δ (x, y), which is a difference of the orthogonal coordinates from the energy source 30" to the thermal activation unit 23, is obtained. In addition, the energy source 30" can be rectilinearly moved in an x-axis direction by Δx and a y-axis direction by Δy using the energy source adjusting means (not illustrated).

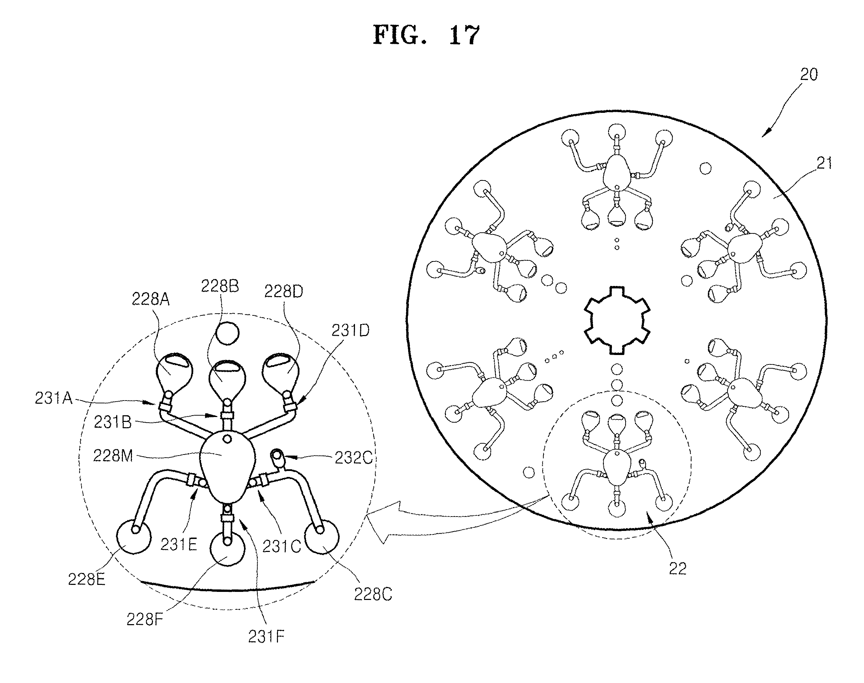

FIG. 17 is a plan view of a microfluidic device 20 including a plurality of thermal activation units according to an embodiment of the present invention. Referring to FIG. 17, the microfluidic device 20 according to the current embodiment of the present invention includes a plurality of microfluidic structures 22 disposed symmetrically on the body of revolution 21. Each of the microfluidic structures 22 includes three sample chambers 228A, 228B, and 228D disposed near to the center of rotation of the body of revolution 21, in other words, the upper part of the microfluidic structure 22, three reaction chambers 228E, 228F, and 228C disposed further from the center of rotation of the body of revolution 21 than the three sample chambers 228A, 228B, and 228D, and a mixing chamber 228M interposed between the three sample chambers 228A, 228B, and 228D and the three reaction chambers 228E, 228F, and 228C. The mixing chamber 228M is connected with the sample chambers 228A, 228B, and 228D and the reaction chambers 228E, 228F, and 228C through channels, respectively, wherein the channels include valve units 231A, 231B, 231C, 231D, 231E, 231F, and 232C, that is, thermal activation units, in the middle of each channel to control fluid flow. The valve unit 232C is a closing valve and the rest of the valve units are opening valves. The sample chambers 228A, 228B, and 228D store samples A, B, and D, respectively and the reaction chambers 228E, 228F, and 228C store reaction materials E, F, and C, respectively, the reaction materials E, F, and C causing a predetermined reaction with the samples A, B, and D. The reaction materials E, F, and C can be present in a liquid or can be fixed onto a solid surface.

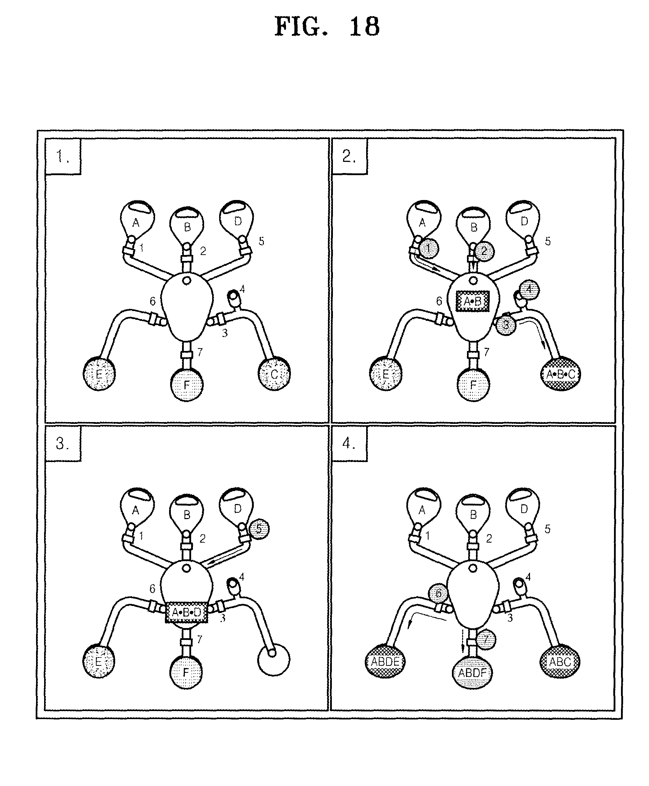

FIG. 18 is a series of diagrams illustrating an example process of operating the microfluidic system including the microfluidic device of FIG. 17, according to an embodiment of the present invention. The microfluidic system according to the current embodiment can be operated as previously programmed. The four sub-drawings of FIG. 18 illustrate a process of operating the microfluidic device and the numbers indicated in each drawing illustrate an operational order of the corresponding valves. The numerical references indicating each component of the microfluidic device, which should be understood to be identical to those shown in FIG. 17, are omitted for brevity in FIG. 18. The microfluidic device of FIG. 8 has six reaction chambers, 228A, 228B, 228D, 228C, 228E and 228F, and a mixing chamber 228M. The reaction chambers 228A, 228B, 228D, 228C, 228E and 228F contains fluid samples A, B, D, and reaction reagents C, E and F, respectively, as shown in Fig. 18.1. First, the opening valves 231A (1) and 231B (2), which controls the fluid flow between the mixing chambers 228A, 228B and the mixing chamber 228M are operated (i.e., opened) to allow the samples A and B to be transferred to the mixing chamber 228M where the samples A and B are mixed together. Next, the opening valve 231C (3), which controls the fluid flow between the mixing chamber 228M and the reaction chamber 228C, is operated (i.e., opened) to transfer a part of the mixture of samples A and B from the mixing chamber 228M to the reaction chamber 228C and the A-B mixture is allowed to react with the reaction reagent C. Then the closing valve 232C (4), which also controls the fluid flow between the mixing chamber 228M and the reaction chamber 228C is closed. Then the opening valve 231D (5), which controls the fluid flow between the reaction chamber 228D and the mixing chamber 228M, is opened, and the sample D is transferred to the mixing chamber 228M, where the sample D is mixed with the remainder of the A-B mixture. Next, the opening valves 231E (6) and 231F (7), which each control the fluid flow between the mixing chamber 228M and the reaction chambers 228E, 228F, respectively, are operated to transfer the A-B-D mixture from the mixing chamber 228M to the reaction chambers 228E and 229F, respectively. Subsequently, a reaction of the samples A and B with the reaction reagent C, a reaction of the samples A, B, and D with the reaction reagent E, and a reaction of samples A, B, and D with the reaction reagent F each occur in the reaction chambers 228C, 228E, and 228F, respectively.

The process illustrated in FIG. 18 is an example of a biological or chemical reaction which can be performed using the microfluidic device or systems according to the embodiments of the present invention. An operation of the microfluidic system in which an operation of each of the valve units 231A, 231B, 231C, 231D, 231E, 231F, and 232C is included can be performed according to the methods mentioned above. It is obvious that the orders of the steps, types of the fluid samples and reaction reagents as well as the configuration of the microfluidic structures may be modified, omitted, or added, depending on the uses and purposes of the microfluidic systems.

The centrifugal force based microfluidic device according to the present invention can include various thermal activation units which are activated by radiation energy and thus various biological or chemical reactions can be performed on a single device. Moreover, a series of reactions involving multiple operations and processes may be performed using a microfluidic structure having a complicated structure configured in a single centrifugal force-based microfluidic device.

In particular, when the valve unit, which is one of the examples of the thermal activation units described above, is used in the microfluidic device according to the present invention, an accurate control of multiple fluid flows is possible. In addition, when the heating unit, which is another example of the thermal activation units described above, is used, instead of indirectly heating the fluid samples through an external heating source or having a resistance heating structure in the device, temperature of the samples can be efficiently and simply controlled with the heat generation particles directly connecting with the fluid samples.

The microfluidic device, the microfluidic system, and the method of operating the microfluidic system according to the present invention accurately control fluid flow and temperature of the fluids in the microfluidic structure independent of the type of fluid samples and rotational speed of the body of revolution. In addition, a more complicated microfluidic structure than a conventional compact-disk type microfluidic device can be disposed on the body of revolution, and a reaction involving more complicated operations and processes can be efficiently performed using the microfluidic device.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A centrifugal force based microfluidic device comprising:
a body of revolution; and
a microfluidic structure disposed in the body of revolution, the microfluidic structure comprising at least two chamber units, and a channel connecting the chamber units to each other and forming a fluid flow path between the chamber units, wherein the chamber units each are disposed at different distances with respect to each other from a center of rotation of the body of revolution and a fluid sample moves along the channel by centrifugal force,
wherein the microfluidic structure comprises at least one thermal activation unit which has heat generation particles that generate heat upon absorbing electromagnetic waves.

2. The microfluidic device of Claim 1, which further comprises an external energy source applying the electromagnetic waves to the thermal activation unit.

3. The microfluidic device of Claim 1, wherein the thermal activation unit is a valve unit comprising a valve material in which the heat generation particles are dispersed in a dispersing medium, the dispersing medium being formed of a phase-change material which is in a solid state at room temperature, wherein the valve material is melted by heat generated by the heat generation particles, thereby opening or closing the channel.

4. The microfluidic device of Claim 3, wherein the valve unit is an opening valve which is disposed to close the channel at an initial stage, wherein the valve material is melted by heat generated by the heat generation particles, thereby opening the channel.

5. The microfluidic device of Claim 3, wherein the valve unit is a closing valve which is disposed in a valve chamber connecting to the channel which is opened at an initial stage, wherein the valve material is melted and expanded by heat generated by the heat generation particles to flow into the channel, thereby closing the channel.

6. The microfluidic device of Claim 3, wherein the phase-change material is selected from the group consisting of wax, gel, and a thermoplastic resin.

7. The microfluidic device of Claim 1, wherein the heat generation particles have a diameter of 1 nm to 100 µm.

8. The microfluidic device of Claim 1, wherein the heat generation particles are at least one selected from the group consisting of polymeric beads, quantum dots, Au nanoparticles, Ag nanoparticles, beads with metal composition, carbon particles, and magnetic beads.

9. The microfluidic device of Claim 1, wherein the heat generation particles comprise a metallic component.

10. The microfluidic device of Claim 1, wherein the thermal activation unit comprises a heating unit which stores a fluid sample containing a plurality of heat generation particles dispersed therein, and absorbs electromagnetic waves to heat the fluid sample.

11. The microfluidic device of Claim 1 or 10, wherein the heat generation particle comprises a core and a shell, the core absorbing electromagnetic waves to convert the waves into heat energy, and the shell surrounding the core.

12. The microfluidic device of Claim 11, wherein the core is formed of a ferromagnetic metal or a metal oxide.

13. The microfluidic device of Claim 11, wherein the surface of the shell is modified to be coupled to biomolecules.

14. A microfluidic system comprising:
the microfluidic device according to any one of claims 2 to 13
a rotation operating unit which operates the body of revolution of the microfluidic device;
an energy source adjusting means which adjusts position or direction of the energy source and concentrates the electromagnetic waves irradiated from the external energy source onto a desired region in the body of revolution.

15. The microfluidic system of Claim 14, wherein the rotation operating unit comprises a motor to control rotation speed and rotation angle of the body of revolution.

16. The microfluidic system of Claim 14, wherein the external energy source adjusting means comprises a rectilinearly moving means which moves the external energy source in a radial direction of the body of revolution.

17. The microfluidic system of Claim 14, wherein the external energy source adjusting means comprises at least one reflector which reflects electromagnetic waves radiated from the external energy source, and a reflector operating unit which adjusts an angle of the reflector and changes the route of the electromagnetic waves.

18. The microfluidic system of Claim 14, wherein the external energy source adjusting means comprises a means which moves the external energy source, above the body of the revolution, in a radial direction of the body of the revolution and a direction perpendicular to the radial direction, the radial direction and perpendicular direction movements are made on a same plane.

19. The microfluidic system of Claim 14, wherein the external energy source is a laser light source.

20. The microfluidic system of Claim 19, wherein the laser light source comprises at least one laser diode.

21. The microfluidic system of Claim 19, wherein the laser irradiated from the laser light source is about 1 mJ/pulse or above.

22. The microfluidic system of Claim 19, wherein the laser irradiated from the laser light source is about 14 mW or above.

23. The microfluidic system of Claim 19, wherein the laser irradiated from the laser light source has a wavelength of 400 to 1300 nm.

24. A method of operating the microfluidic system of any one of claims 14 to 23 comprising:
obtaining position information on each of the thermal activation units of the microfluidic device seated on the rotation operating unit;
targeting the external energy source toward any one of the thermal activation units selected using the obtained position information; and
radiating electromagnetic waves from the external energy source for activating the selected thermal activation unit.

25. The method of Claim 24, wherein the targeting the external energy source comprises detecting a deviation Δ(r,θ) or Δ(x,y) between a position of the selected thermal activation unit and a position where the electromagnetic waves of the external energy source reach, based on the position information obtained in the targeting step, and adjusting the position where the electromagnetic waves of the external energy source reach by the deviation Δ(r,θ) or Δ(x, y) using the rotation operating unit and the external energy source adjusting means.

26. The method of Claim 25, wherein the body of revolution is rotated by Δθ using the rotation operating unit and the position where the electromagnetic waves reach is moved by Δr in a radial direction of the body of revolution using the external energy source adjusting means.

27. The method of Claim 25, wherein the position where the electromagnetic waves reach is moved by Δ (x,y) according to deviations on the orthogonal coordinates using the external energy source adjusting means, during which the microfluidic device is stopped.

28. The method of Claim 24, wherein the activating the thermal activation unit comprises rotating the body of revolution in a reciprocating manner within a predetermined angle using the rotation operating unit.

29. The method of Claim 24, wherein the activating the thermal activation unit comprises vibrating the external energy source at a position where the electromagnetic waves reach in a reciprocating manner within a predetermined distance in a radial direction of the body of revolution using the external energy source adjusting means.
